# DEMANDE DE BREVET EUROPEEN

(11) **EP 2 213 487 A1**
(43) Date de publication de la demande: **04.08.2010**
(21) Numéro de dépôt: 09180723.0
(22) Date de dépôt: 24.12.2009
(51) Int. Cl.: B60G 11/44, B60G 21/05, B60G 3/16, F16F 1/368, F16F 1/366

(54) **Train arrière pour véhicule automobile comprenant deux ressorts latéraux en matériaux composites**

(30) Priorité: 29.01.2009 FR 0950558
(71) Demandeur: Peugeot Citroën Automobiles SA, 78140 Vélizy-Villacoublay (FR)
(72) Inventeur: Lizot, Arnaud, 92600 Asnieres sur Seine (FR)

(57) **Abrégé**

Train arrière pour véhicule automobile comprenant deux ressorts latéraux en matériaux composites, comportant chacun une lame longitudinale de suspension (2) mise à plat, **caractérisé en ce que** chaque lame de suspension forme un bras de suspension comprenant à l'avant une fixation (16) sur la caisse du véhicule (4), et à l'arrière un porte-moyeu (12, 50) de roue, une traverse déformable de liaison (18, 30) étant liée aux lames de suspension, en un point intermédiaire situé entre la fixation (16) sur la caisse et le porte-moyeu (12, 50).

## Description

La présente invention concerne un train arrière pour véhicule automobile, ainsi qu'un véhicule automobile équipé de ce train.

Les véhicules automobiles comportent généralement un train arrière lié à la caisse du véhicule, qui supporte les moyeux des roues arrière tout en assurant un guidage de ces roues pour permettre un débattement des suspensions.

Un type de train arrière connu appelé train à traverse déformable, comprend deux bras de suspension longitudinaux disposés sur les cotés du véhicule, l'avant de ces bras étant relié à la caisse du véhicule par une liaison élastique pouvant pivoter suivant un axe sensiblement transversal. Un moyeu de roue est fixé à l'arrière de chaque bras.

Les liaisons élastiques permettent de filtrer des vibrations venant des roues lors du roulage, pour éviter une transmission de vibrations à la caisse du véhicule et limiter les bruits.

Le train arrière à traverse déformable comporte une forme générale en « H », une traverse déformable disposée transversalement, étant fixée par ses extrémités sur une partie centrale de chaque bras de suspension. Cette traverse déformable maintient la géométrie des bras de suspension tout en assurant par une déformation en torsion, la fonction de barre anti-dévers réalisant une limitation de l'angle de roulis de la caisse.

Ce type de train arrière à traverse déformable offre un bon compromis entre un guidage satisfaisant des roues arrière et un coût modéré. Il est largement répandu.

La caisse est supportée par deux ressorts de suspension hélicoïdaux réalisés avec un fil en acier, prenant appui chacun sur la partie arrière d'un bras de suspension. Un amortisseur hydraulique est disposé en parallèle de chaque ressort, pour amortir les oscillations de la caisse et assurer le confort ainsi que la tenue de route.

Le train arrière à traverse déformable est généralement réalisé par mécano-soudure d'éléments emboutis et soudés. Il est relativement lourd, et les ressorts de suspension sont encombrants.

Pour réaliser un train arrière comportant une suspension plus légère et moins encombrante, il est connu d'utiliser des ressorts en matériaux composites.

Un tel train arrière décrit notamment dans le document FR-A1-2580556, comporte une traverse déformable dont les extrémités sont fixées à l'avant de deux bras supportant chacun en leur partie arrière un moyeu de roue.

Une lame de suspension réalisée en matériaux composites et disposée à plat, a sa partie arrière comprenant environ la moitié de la longueur, qui est insérée dans le bras formant un caisson longitudinal. L'autre moitié des lames de suspension dépassant vers l'avant des bras, a son extrémité avant fixée à la caisse du véhicule par une articulation.

Deux points d'appui de la caisse du véhicule, reposent sur l'avant des bras, c'est-à-dire sensiblement au milieu des lames de suspension. Les lames de suspension reçoivent le poids de la caisse en un point central, ce poids s'équilibrant avec les forces s'exerçant vers le haut sur les extrémités de ces lames qui travaillent en flexion pour permettre le débattement des suspensions.

Un inconvénient de ce train arrière est que la traverse et les bras métalliques doublés par les lames de suspension, forment un ensemble relativement lourd. De plus, il faut prévoir des liaisons complexes entre les lames en matériaux composites et les bras métalliques.

La présente invention a notamment pour but d'éviter ces inconvénients de la technique antérieure, et de proposer un train arrière simple et léger, comportant des ressorts en matériaux composites.

Elle propose à cet effet un train arrière pour véhicule automobile comprenant deux ressorts latéraux en matériaux composites, comportant chacun une lame longitudinale de suspension mise à plat, **caractérisé en ce que** chaque lame de suspension forme un bras de suspension comprenant à l'avant une fixation sur la caisse du véhicule, et à l'arrière un porte-moyeu de roue, une traverse déformable de liaison étant liée aux lames de suspension, en un point intermédiaire situé entre la fixation sur la caisse et le porte-moyeu.

Un avantage principal du train arrière selon l'invention, est que les lames maintenues en position par la traverse peuvent former directement des bras de suspension, tout en constituant aussi les ressorts de suspension.

De plus le train arrière selon l'invention peut comporter une ou plusieurs des caractéristiques suivantes, qui peuvent être combinées entre elles.

Avantageusement, la traverse déformable est réalisée en matériaux composites.

La traverse déformable peut être raccordée aux lames de suspension par une liaison comprenant des matériaux composites.

Avantageusement, la section de la traverse comporte une forme globale en « V » inversé, comprenant une partie centrale supérieure qui se prolonge de chaque côté par des pentes allant en s'éloignant.

Avantageusement, l'avant des lames de suspension est relié à la caisse du véhicule par une liaison formant un encastrement.

La liaison élastique peut comprendre des moyens de serrage espacés longitudinalement, qui serrent la lame de suspension sur la caisse du véhicule, des éléments élastiques étant interposés entre cette lame de suspension et la caisse.

Les moyens de serrage peuvent comprendre deux vis vissées sous la caisse du véhicule, des anneaux élastiques étant disposés autour des vis, de part et d'autre de la lame de suspension.

Suivant une version particulière, le porte-moyeu est relié vers le bas à la lame de suspension par une articulation élastique inférieure, et vers le haut par un guidage linéaire comportant une articulation élastique supérieure fixée à la caisse du véhicule.

Une biellette peut relier le porte-moyeu à la lame de suspension, de manière à bloquer la rotation de ce porte-moyeu autour de l'axe passant pas les deux articulations élastiques.

L'invention a aussi pour objet un véhicule automobile comprenant un train arrière reliant les roues arrière à la caisse de ce véhicule, tel que décrit ci-dessus.

L'invention sera mieux comprise et d'autres caractéristiques et avantages apparaîtront plus clairement à la lecture de la description ci-après, donnée à titre d'exemple en référence aux dessins annexés dans lesquels :
- les figures 1 à 4 présentent successivement des vues schématiques de dessus, arrière, de côté et de côté sous charge, d'un demi-train arrière selon l'invention, suivant une première version ;
- les figures 5 et 6 présentent successivement des vues schématiques de côté et arrière, d'un demi-train arrière selon l'invention, suivant une deuxième version ; et
- les figures 7 à 10 présentent successivement des vues schématiques de dessus, arrière, de côté et de côté sous charge, d'un demi-train arrière selon l'invention, suivant une troisième version.

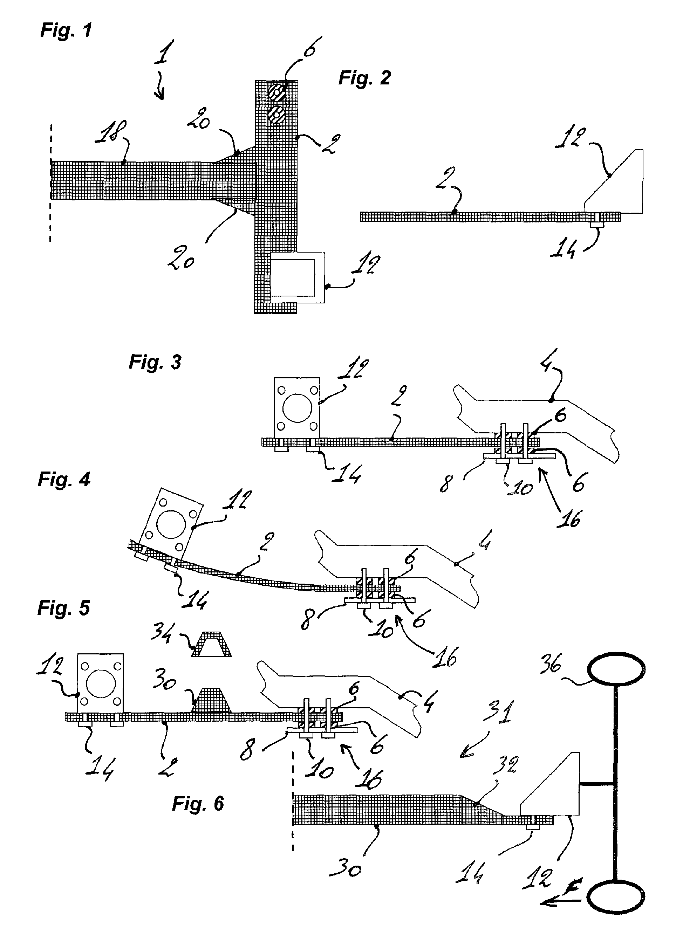

Les figures 1 à 3 présentent la partie latérale droite d'un demi-train comportant une lame de suspension 2 disposée longitudinalement sur le côté du véhicule, et mise à plat dans un plan sensiblement horizontal.

L'avant de la lame de suspension 2 comporte deux perçages alignés longitudinalement, recevant deux vis de serrage 10 qui sont serrées sous la caisse 4 du véhicule. Sur chaque vis de serrage 10, deux anneaux 6 en matière élastique, comprenant par exemple du caoutchouc, sont disposés de part et d'autre de la lame de suspension 2, une plaque d'appui 8 étant interposée entre les têtes de vis et une première série d'anneaux élastiques, pour répartir la pression.

Les anneaux élastiques 6 étant relativement rigides en compression, on réalise de cette manière une liaison filtrante 16, assimilable à un encastrement reprenant sur la lame de suspension 2 des efforts de flexion autour d'un axe transversal, comme présenté figure 4.

Contrairement aux trains arrière suivant l'art antérieur, comportant deux bras de suspension fixés à la caisse du véhicule par des articulations élastiques pivotantes autour d'un axe transversal, la caisse du véhicule exerce un effort de réaction à la flexion des lames de suspension 2.

Les perçages de la lame de suspension 2 étant un peu plus grand que le diamètre des vis 10, la liaison filtrante 16 comporte un léger degré de liberté longitudinalement et transversalement, pour assurer un filtrage des vibrations provenant des roues lors du roulage, et éviter de les transmettre à la caisse du véhicule 4.

A l'arrière de la lame de suspension 2, un porte-moyeu 12 est fixé par une série de vis 14, traversant par en dessous la lame pour venir se visser dans ce porte-moyeu.

Une traverse déformable 18 formant aussi une lame disposée à plat, a ses extrémités qui viennent se raccorder sur le côté des lames de suspension 2, sensiblement à mi-distance entre la liaison filtrante 16 et le porte-moyeu 12. Deux renforts 20 formant des triangles, viennent renforcer chaque raccordement de part et d'autre de la traverse 18.

Les lames de suspension 2 sont réalisées en matériaux composites, formés de fibres imprégnées de résine. Ces fibres peuvent être orientées en fonction des directions des efforts prépondérants. L'épaisseur et la largeur de la lame de suspension 2, peuvent varier en fonction de la répartition des contraintes à supporter.

On peut avantageusement utiliser de la fibre de verre imprégnée de résine époxy, qui représente un bon niveau de résistance mécanique pour un coût modéré.

On peut par exemple, réaliser trois pièces raccordées ensuite par des moyens de fixation mécaniques.

La traverse déformable 18 subissant des contraintes en torsion, peut être métallique, ou réalisée aussi en matériaux composites.

Dans le cas d'une traverse 18 déformable réalisée en matériaux composites, cette traverse peut être reliée aux lames de suspension 2 par un assemblage utilisant aussi des matériaux composites. En variante, l'ensemble du train arrière 1 comprenant les deux lames de suspension 2 et la traverse déformable 18, peut être moulé en seule pièce.

Le train arrière 1 ainsi formé comporte la fonction ressort intégrée dans les bras de suspension, constitués par les lames de suspension 2. On gagne le poids et l'encombrement des ressorts hélicoïdaux de suspension. De plus, le poids des bras de suspension et de la traverse déformable est réduit, le train arrière 1 est compact et léger.

Par ailleurs, avec les liaisons filtrantes 16 possédant une certaine flexibilité dans le plan de la lame de suspension 2, et en ajustant cette flexibilité dans les deux directions de ce plan, on peut aussi faire varier le plan des roues sous l'effet des efforts transversaux dans les virages pour améliorer la dynamique du véhicule.

Les figures 5 et 6 présentent un demi-train 31 similaire à celui présenté ci-dessus, comprenant une traverse déformable 30 comportant une section différente.

La section 34 représentée de manière décalée au dessus de la traverse déformable 30 sur la figure 5, est constante. Cette section 34 comporte une forme globale en « V » inversé, comprenant vers le haut une partie horizontale qui se prolonge de chaque côté par des pentes symétriques allant en s'éloignant.

Les extrémités de la traverse déformable 30 comportent des pentes de raccordement 32, se terminant par une épaisseur réduite se raccordant sur les lames de suspension 2 d'épaisseur similaire.

La section 34 creuse en « V » de la traverse déformable 30, permet un allégement de cette traverse tout en disposant d'une bonne raideur en torsion suivant son axe, pour assurer la fonction de barre anti-devers. Cette section 34 permet aussi une bonne tenue en réaction aux efforts transversaux F exercés par les roues 36, dans les virages notamment, où cette traverse est sollicitée en flexion. On maintient ainsi facilement la géométrie du train arrière 51.

De plus, cette section 34 creuse de traverse 30 permet d'avoir un centre de torsion placé au dessus de cette traverse, ce qui augmente les mouvements du plan de roue lors des débattements dissymétriques des deux roues arrière 36. Dans les phases de roulis de la caisse, le pincement des roues 36, c'est-à-dire la variation du parallélisme de ces roues, est augmenté, ce qui améliore la stabilité du véhicule.

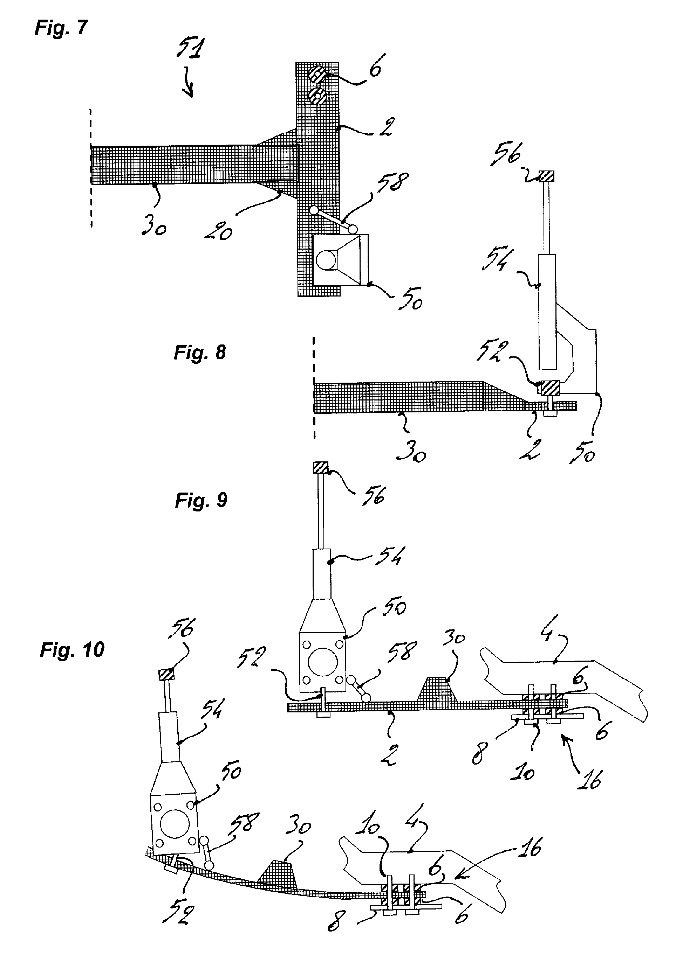

Les figures 7 à 10 présentent un train arrière 51 comprenant des lames de suspension 2 et une traverse 30 similaires à celles présentées figures 5 et 6, et un porte-moyeu 50 différent.

Le porte-moyeu 50 est relié à sa base par une articulation élastique inférieure 52, qui est fixée à l'arrière de la lame de suspension 2. II est relié aussi dans sa partie supérieure, à un amortisseur hydraulique 54 formant un guidage linéaire télescopique, qui comporte en partie haute une articulation élastique supérieure 56, fixée à la caisse du véhicule.

Une biellette 58 relie le porte-moyeu 50 à la lame de suspension 2, suivant un certain angle dans un plan horizontal de manière à bloquer la rotation de ce porte-moyeu autour de l'axe passant pas ses deux articulations élastiques 52, 56.

On obtient ainsi un guidage de la roue proche de celui réalisé par une suspension du type MacPherson, le porte-moyeu 50 avec son guidage linéaire 54 formant une jambe de force restant sensiblement verticale, le pincement de la roue pouvant être réglé par la biellette 58.

La roue ainsi guidée par la jambe de force, transmet moins de contraintes à la lame de suspension 2, une partie des contraintes étant reprises par l'articulation élastique supérieure 56 fixée sur la caisse du véhicule. Le guidage de la roue peut être mieux assuré.

Les articulations élastiques supérieure 56 et inférieure 52, permettent de filtrer les vibrations générées par la roue lors du roulage.

De plus, selon l'inclinaison de la biellette 58, en particulier dans le plan horizontal, on peut prévoir un petit mouvement du plan de roue par déformation élastique suivant les efforts, pour par exemple favoriser un pincement de la roue avec les efforts générés lors des freinages, qui favorise la stabilité du véhicule.

Le train arrière selon l'invention permet notamment d'alléger le véhicule, et de gagner de la place en particulier dans le coffre de ce véhicule. De plus, on supprime les renforts nécessaires sur la caisse du véhicule, pour réaliser l'interface entre le ressort hélicoïdal et cette caisse.

## Revendications

1. - Train arrière pour véhicule automobile comprenant deux ressorts latéraux en matériaux composites, comportant chacun une lame longitudinale de suspension (2) mise à plat, **caractérisé en ce que** chaque lame de suspension forme un bras de suspension comprenant à l'avant une fixation (16) sur la caisse du véhicule (4), et à l'arrière un porte-moyeu (12, 50) de roue, une traverse déformable de liaison (18, 30) étant liée aux lames de suspension, en un point intermédiaire situé entre la fixation (16) sur la caisse et le porte-moyeu (12, 50).

2. - Train arrière selon la revendication 1, **caractérisé en ce que** la traverse déformable (18) est réalisée en matériaux composites.

3. - Train arrière selon la revendication 2, **caractérisé en ce que** la traverse déformable (18) est raccordée aux lames de suspension (2) par une liaison comprenant des matériaux composites.

4. - Train arrière selon la revendication 2 ou 3, **caractérisé en ce que** la section (34) de la traverse (30) comporte une forme globale en « V » inversé, comprenant une partie centrale supérieure qui se prolonge de chaque côté par des pentes allant en s'éloignant.

5. - Train arrière selon l'une quelconque des revendications précédentes, **caractérisé en ce que** l'avant des lames de suspension (2) est relié à la caisse du véhicule (4) par une liaison (16) formant un encastrement.

6. - Train arrière selon la revendication 5, **caractérisé en ce que** la liaison élastique (16) comprend des moyens de serrage (10) espacés longitudinalement, qui serrent la lame de suspension (2) sur la caisse (4) du véhicule, des éléments élastiques (6) étant interposés entre cette lame de suspension et la caisse.

7. - Train arrière selon la revendication 6, **caractérisé en ce que** les moyens de serrage comprennent deux vis (10) vissées sous la caisse (4) du véhicule, des anneaux élastiques (6) étant disposés autour des vis, de part et d'autre de la lame de suspension (2).

8. - Train arrière selon l'une quelconque des revendications précédentes, **caractérisé en ce que** le porte-moyeu (50) est relié vers le bas à la lame de suspension (2) par une articulation élastique inférieure (52), et vers le haut par un guidage linéaire comportant une articulation élastique supérieure (56) fixée à la caisse du véhicule.

9. - Train arrière selon la revendication 8, **caractérisé en ce qu'**une biellette (58) relie le porte-moyeu (50) à la lame de suspension (2), de manière à bloquer la rotation de ce porte-moyeu autour de l'axe passant pas les deux articulations élastiques (52, 56).

10. - Véhicule automobile comportant un train arrière (1, 31, 51) reliant les roues arrière à la caisse (4) de ce véhicule, selon l'une quelconque des revendications précédentes.
